(19) Europäisches Patentamt
European Patent Office
Office européen des brevets

(11) **EP 4 610 926 A1**

(12) **EUROPEAN PATENT APPLICATION**

(43) Date of publication:
**03.09.2025 Bulletin 2025/36**

(21) Application number: **25157605.4**

(22) Date of filing: **13.02.2025**

(51) International Patent Classification (IPC):
**G06T 7/00** *(2017.01)* **G06T 7/11** *(2017.01)*
**H04N 23/611** *(2023.01)*

(52) Cooperative Patent Classification (CPC):
**G06T 7/0012; G06T 7/11; H04N 23/611;**
G06T 2207/20024; G06T 2207/30201

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.02.2024 JP 2024030635**

(71) Applicant: **CANON KABUSHIKI KAISHA
Tokyo 146-8501 (JP)**

(72) Inventor: **IKEDA, Koichiro
Ohta-ku, Tokyo, 146-8501 (JP)**

(74) Representative: **TBK
Bavariaring 4-6
80336 München (DE)**

(54) **IMAGE PROCESSING APPARATUS AND METHOD, ELECTRONIC APPARATUS, PROGRAM, AND STORAGE MEDIUM**

(57) An image processing apparatus comprises: input means configured to input an image signal; extracting means configured to extract a first signal in a predetermined first frequency band from the image signal; and adjusting means configured to adjust an amplitude of the first signal so that the amplitude falls within a predetermined amplitude range.

FIG. 4

**Description**

BACKGROUND OF THE INVENTION

Field of the Invention

The present invention relates to an image processing apparatus and method, an electronic apparatus, a program, and a storage medium, and in particular to a skin beautification technique.

Description of the Related Art

Conventionally, there is known a skin beautification technique that, in an image including the person, provides a skin-beautified image by correcting the skin region of a person. For example, a method has been proposed in which an ε-filter is applied to separate and remove small-amplitude high-frequency noise components superimposed on a signal waveform, and small-amplitude gradients of wrinkles, blemishes, etc. are smoothed while large-gradient edges such as contours are preserved (Japanese Patent Laid-Open No. 2001-118064).

However, the method disclosed in Japanese Patent Laid-Open No. 2001-118064 has the problem that, along with wrinkles, blemishes, and the like, fine irregularities on the surface of a person's skin, such as skin texture, are also lost, resulting in an unnatural impression of skin texture.

SUMMARY OF THE INVENTION

The present invention has been made in consideration of the above situation, and performs skin beautification correction that gives a natural impression while retaining the texture of the person's skin.

The present invention in its first aspect provides an image processing apparatus as specified in claims 1 to 12.

The present invention in its second aspect provides an electronic apparatus as specified in claim 13.

The present invention in its third aspect provides an image processing method as specified in claim 14.

The present invention in its fourth aspect provides a program as specified in claim 15.

The present invention in its fifth aspect provides a computer-readable storage medium as specified in claim 16.

Further features of the present invention will become apparent from the following description of exemplary embodiments (with reference to the attached drawings).

BRIEF DESCRIPTION OF THE DRAWINGS

The accompanying drawings, which are incorporated in and constitute a part of the specification, illustrate embodiments of the invention, and together with the description, serve to explain the principles of the invention.

FIG. 1 is a block diagram illustrating a schematic functional configuration of an image capturing apparatus according to an embodiment of the present invention.

FIG. 2 is a block diagram illustrating a functional configuration of an image processing unit according to the embodiment.

FIG. 3 is a block diagram illustrating a functional configuration of a development processing unit according to the embodiment.

FIG. 4 is a block diagram illustrating a functional configuration of a skin correction processing unit according to the embodiment.

FIG. 5 is a flow chart illustrating a flow of processing for generating a skin-beautified image according to the embodiment.

FIG. 6 is a flow chart illustrating development processing according to the embodiment.

FIG. 7 is a flow chart illustrating a flow of skin correction processing according to the embodiment.

FIGS. 8A and 8B are conceptual diagrams of AC component extraction processing in the skin correction processing according to the embodiment.

FIGS. 9A to 9D are diagrams explaining a concept of a method of adjusting AC components in the skin correction processing according to the embodiment.

FIGS. 10A and 10B are diagrams explaining adjustment parameters for AC components according to the embodiment.

FIGS. 11A and 11B are diagrams explaining the results after amplitude adjustment according to the embodiment.

FIGS. 12A and 12B are diagrams explaining a method of selecting frequencies based on face detection results according to the embodiment.

DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

In the drawings, configurations represented as blocks may be realized by integrated circuits (ICs) such as ASICs and FPGAs, by discrete circuits, or by a combination of a memory and a processor that executes a program stored in the memory. Also, one block may be realized by a plurality of integrated circuit packages, or a plurality of blocks may be realized by one integrated circuit package. Also, the same block may be implemented in different configurations depending on the operating environment, required capabilities, etc.

In the following embodiment, a case where the present invention is implemented in an image capturing apparatus such as a digital camera will be described, however, the present invention can also be implemented in any electronic apparatus having an image capturing function. Such electronic apparatuses include image capturing apparatuses, computer devices (personal computers, tablet computers, media players, PDAs, etc.), mobile phones, smartphones, game consoles, robots, drones, dashboard cameras, etc. Note that these are merely examples, and the present invention can also be implemented in other electronic apparatuses.

• Device configuration

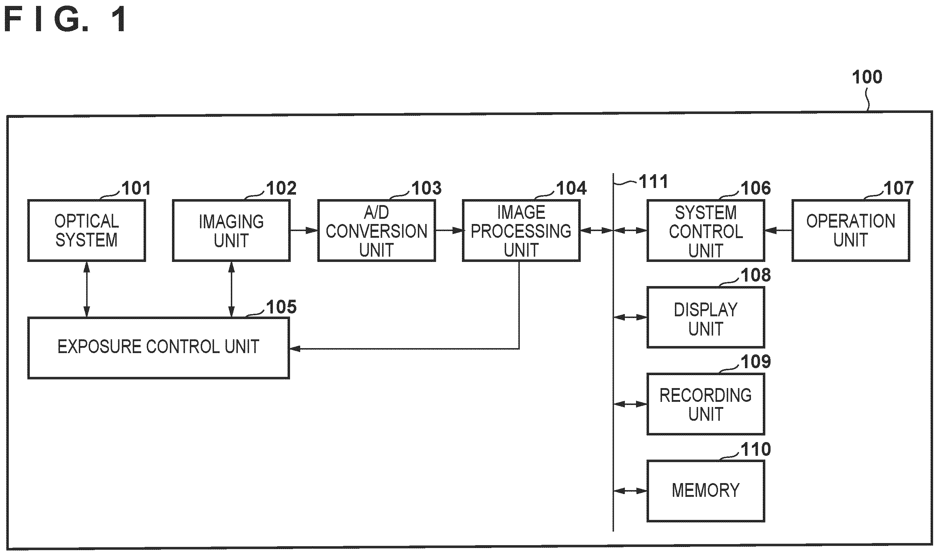

FIG. 1 is a block diagram showing a schematic functional configuration of an image capturing apparatus 100 according to an embodiment of the present invention. FIG. 1 illustrates only representative components of the image capturing apparatus 100.

An optical system 101 includes a plurality of lenses, an aperture that also serves as a shutter, an aperture actuation mechanism, etc., and an optical image of a subject (subject image) is formed on a light receiving surface of an imaging unit 102 via the optical system 101. The plurality of lenses include movable lenses such as a focus lens that adjusts the focal distance of the optical system 101 and a zoom lens that changes the angle of view, and the optical system 101 includes actuation mechanisms that actuates these movable lenses.

The imaging unit 102 is a color image sensor including a known CCD or CMOS sensor having a primary color Bayer array color filter, and includes a pixel array in which a plurality of pixels are arranged two-dimensionally, and a peripheral circuit for actuating each pixel and reading a signal from each pixel. Each pixel accumulates a charge converted through photoelectric conversion according to the amount of incident light. Then, a pixel signal (analog image signal) representing the subject image formed by the optical system 101 is obtained by reading from each pixel a voltage signal according to the amount of charge accumulated during an exposure period.

An A/D conversion unit 103 converts the analog image signal read out from the imaging unit 102 into a digital image signal (image data) by A/D conversion. Note that if the imaging unit 102 has an A/D conversion function, the A/D conversion unit 103 is not necessary.

An image processing unit 104 applies predetermined image processing to image data output from the A/D conversion unit 103 and image data read out from a recording unit 109, generates signals and image data according to the purpose, and acquires and/or generates various information. The image processing unit 104 may be a dedicated hardware circuit such as an application specific integrated circuit (ASIC) designed to realize a specific function. Alternatively, the image processing unit 104 may be configured to realize a specific function by a processor such as a digital signal processor (DSP) or a graphics processing unit (GPU) executing software.

Image processing that the image processing unit 104 can apply to image data may include, for example, pre-processing, color interpolation processing, correction processing, detection processing, data processing, evaluation value calculation processing, special effect processing, and the like.

The pre-processing may include signal amplification, reference level adjustment, defective pixel correction, etc. The color interpolation processing is performed in a case where a color filter is provided in the imaging unit 102, and is processing for interpolating values of color components not included in individual pixel data constituting the image data. The color interpolation processing is also called demosaicing processing. The correction processing may include processing such as white balance adjustment, gradation correction, correction of image degradation caused by optical aberration of the optical system 101 (image restoration), correction of the effect of peripheral light falloff of the optical system 101, color correction, etc. The detection processing may include detection of feature regions (e.g., face regions and human body regions) and their movements, person recognition processing, etc.

The data processing may include processing such as cutting out areas (trimming), compositing, scaling, encoding and decoding, and generating header information (generating data files). The generation of image data for display and image data for recording is also included in the data processing. The evaluation value calculation processing may include processing such as generating signals and evaluation values used in autofocus detection (AF) and generating evaluation values used in automatic exposure control (AE). The special effect processing may include processing such as adding a blur effect, changing color tones, and relighting.

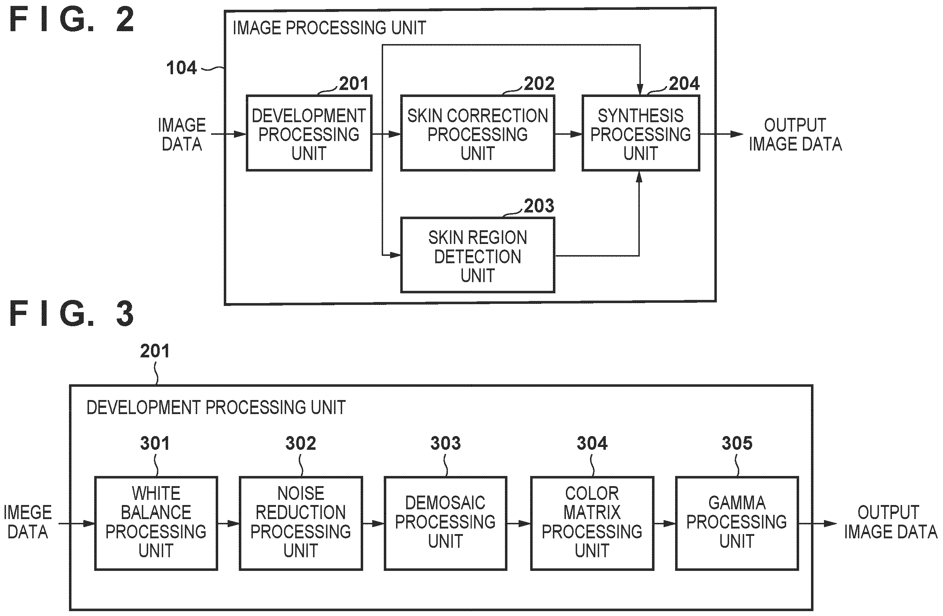

Note that these are examples of processing that the image processing unit 104 may apply to image data, and do not limit the processing that the image processing unit 104 applies. For example, the skin beautification processing in this embodiment can be executed by combining the above-mentioned color interpolation processing, correction processing, detection processing, and special effect processing. FIG. 2 is a block diagram showing a functional configuration of the image processing unit 104 for executing the skin beautification processing, and includes a development processing unit 201, a skin correction processing unit 202, a skin region detection unit 203, and a synthesis processing unit 204. Note that the details of the skin beautification processing will be described later.

Return to FIG. 1, an exposure control unit 105 determines the shooting conditions (aperture value, shutter speed, ISO sensitivity) based on the evaluation value calculated by the image processing unit 104 and a predetermined exposure program chart. Then, the exposure control unit 105 controls the operation of the optical system 101 (aperture) and the imaging unit 102 during shooting based on the determined shooting conditions. The exposure control unit 105 also actuates the optical system 101 (focus lens) based on the evaluation value calculated by the image processing unit 104 to adjust the focal distance of the optical system 101.

A system control unit 106 includes, for example, a processor (CPU, MPU, etc.) capable of executing programs, a ROM, and a RAM. The system control unit 106 loads programs stored in the ROM into the RAM and executes them to control the operation of each part of the image capturing apparatus 100 and realize the functions of the image capturing apparatus 100.

The ROM stores programs to be executed by the processor, various setting values for the image capturing apparatus 100, GUI data, etc. The RAM is the main memory used by the system control unit 106 when executing programs.

An operation unit 107 is a collective term for input devices (buttons, switches, dials, etc.) provided for a user to input various instructions to the image capturing apparatus 100. Functions are assigned to the input devices that make up the operation unit 107, and the input devices include, for example, a release switch, a moving image recording switch, a shooting mode selection dial for selecting a shooting mode, menu buttons, directional keys, an enter key, etc.

The release switch is a switch for recording still images, and the system control unit 106 recognizes the half-pressed state of the release switch as a shooting preparation instruction, and the full-pressed state as a shooting start instruction. In addition, the system control unit 106 recognizes the pressing of the moving image recording switch as a recording start instruction of a moving image when pressed in a shooting standby state, and as a recording stop instruction when pressed during recording the moving image. The operation unit 107 can also set whether or not to perform the skin beautification processing in this embodiment. Note that the functions assigned to the same input device may be changed. In addition, the input devices may be formed as a software buttons or keys using a touch display. In addition, the operation unit 107 may include an input device compatible with a non-contact input method such as voice input or gaze input.

A display unit 108 displays images based on image data obtained by shooting and image data read from the recording unit 109. The display unit 108 is, for example, a liquid crystal display or an organic EL display. By displaying a moving image obtained by shooting on the display unit 108 while shooting the moving image, the display unit 108 can function as an electronic viewfinder (EVF).

The recording unit 109 is a storage device that stores image data for recording generated by the image processing unit 104. The recording unit 109 may be a storage device using, for example, a nonvolatile memory or a magnetic disk. The recording unit 109 may also be a storage device using a removable recording medium.

A memory 110 is, for example, a RAM, and is used by the image processing unit 104 and system control unit 106 to temporarily store various data such as intermediate data. Also, part of the memory 110 may be used as a video memory.

A bus 111 is used for communication of data and control signals between connected blocks.

• Processing for Generating Skin-Beautified Image

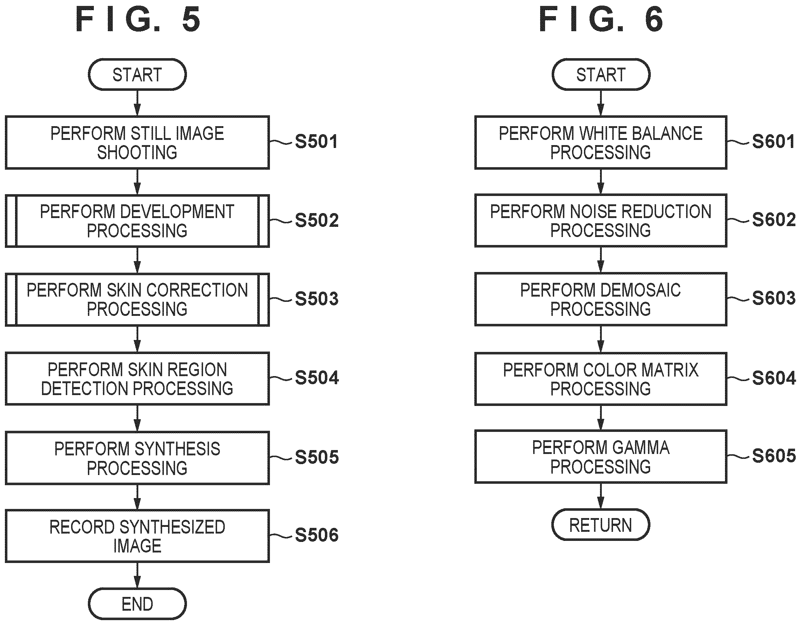

Next, a series of operations performed by the image capturing apparatus 100 having the above configuration when generating a skin-beautified image of this embodiment will be described with reference to the flowchart in FIG. 5. This processing is executed when skin beautification processing is selected by operating the operation unit 107.

First, in step S501, when the system control unit 106 detects that a shooting start instruction is input from the operation unit 107, the system control unit 106 instructs the exposure control unit 105 to start shooting a still image. After the shooting is performed, image data is provided to the image processing unit 104 from the imaging unit 102 via the A/D conversion unit 103.

Next, in step S502, the development processing unit 201 of the image processing unit 104 shown in FIG. 2 applies development processing including demosaic processing to the input image data to generate full-color image data. The data of each pixel constituting the image data supplied from the A/D conversion unit 103 to the image processing unit 104 has information of one color component (R (red), G (green), or B (blue) component) according to the color filter of the primary color Bayer array provided on the imaging unit 102. Therefore, the development processing unit 201 generates full-color image data according to its use from the input image data. The full-color image data is image data in which each pixel data has color components necessary to express a color image, such as YUV or RGB. The functional configuration of the development processing unit 201 and details of the development processing performed in step S502 will be described later with reference to FIG. 3 and FIG. 6.

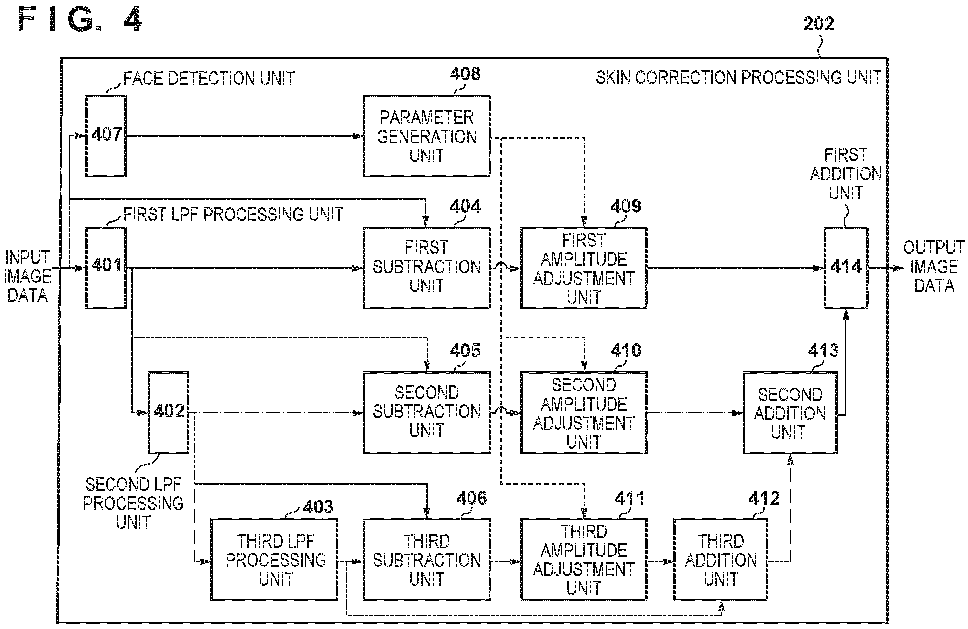

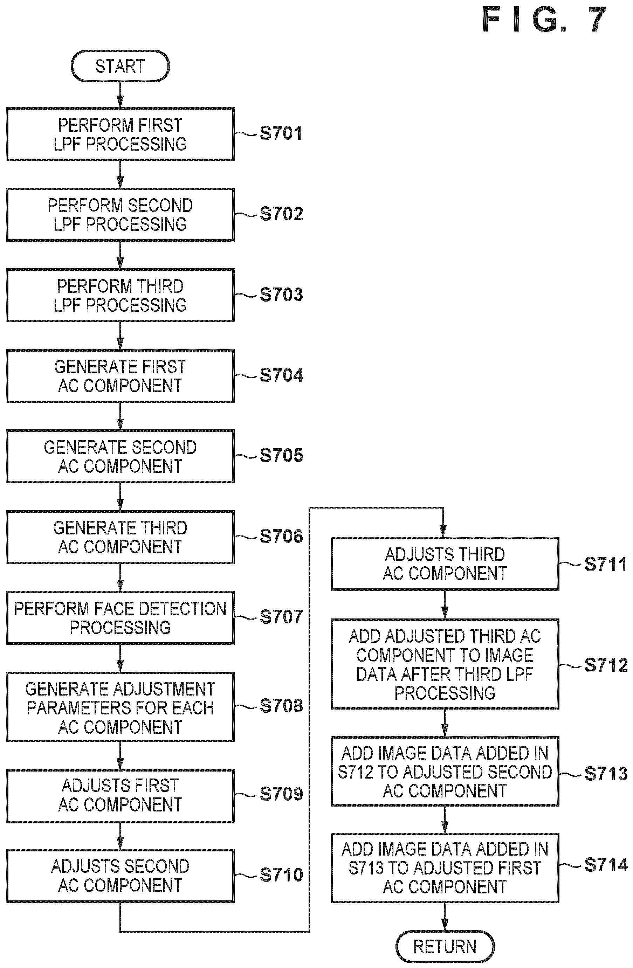

Next, in step S503, the skin correction processing unit 202 of the image processing unit 104 applies skin correction processing to the full-color image data generated by the development processing unit 201. In the skin correction processing, AC components are extracted for each frequency from the input full-color image data, and the AC components are adjusted for each frequency according to the characteristics of the person's skin and face, and the adjusted AC components are reconstructed to generate skin-corrected image data. The functional configuration of the skin correction processing unit 202 and the details of the skin correction processing performed in step S503 will be described later with reference to FIG. 4 and FIG. 7.

Then, in step S504, the skin region detection unit 203 of the image processing unit 104 applies a process for detecting a skin region to the full-color image data generated by the development processing unit 201. In this embodiment, a general method for extracting an area corresponding to skin color based on the hue, saturation, and brightness of an image is used, but detection processing based on learning data such as deep learning may also be performed. The detection result of the skin region is output to the synthesis processing unit 204.

In step S505, the synthesis processing unit 204 of the image processing unit 104 synthesizes the full-color image data generated by the development processing unit 201 and the skin-corrected image data generated by the skin correction processing unit 202 according to the detection result of the skin region detected by the skin region detection unit 203.

More specifically, let the signal value of the synthesized image at coordinates (x, y) be out_pix(x, y), the image signal generated in step S502 be in_pix(x, y), and the image signal subjected to skin correction processing by the skin region detection unit 203 in step S503 be cor_pix(x, y), then the synthesis processing is expressed by Equation (1). $\alpha(x, y)$ indicates the detection result of the skin region detected in step S504, and takes a value between 0.0 and 1.0, with the probability of being a skin region increasing as the value approaches 1.0 from 0.0.

$$\text{out\_pix}(x, y) = (1.0 - \alpha(x, y)) \times \text{in\_pix}(x, y) + \alpha(x, y) \times \text{cor\_pix}(x, y)$$

$$\dots (1)$$

In step S506, the system control unit 106 stores the synthesized image data to which the skin beautification processing has been applied and which has been output from the image processing unit 104 in a data file of a predetermined format, and records the data file in the recording unit 109. Note that the system control unit 106 can apply necessary processing, such as encoding processing, to the synthesized image data before recording.

In addition, the image processing unit 104 may generate image data for display from the generated synthesized image data and write the image data to a video memory area of the memory 110, thereby causing the display unit 108 to display the synthesized image.

• Development Processing

Next, a description will be given of the details of the development processing performed by the development processing unit 201 of the image processing unit 104 in step S502. FIG. 3 is a block diagram showing the functional configuration of the development processing unit 201, and FIG. 6 is a flowchart showing the development processing.

First, in step S601, a white balance processing unit 301 applies white balance processing to adjust the color balance in accordance with the color temperature of the ambient light at the time of shooting to the image data input from the A/D conversion unit 103. The white balance processing is a process of adjusting the color balance in the image by applying individual gains to the R, G, and B components as shown in the following Equation (2).

In Equation (2), Rin, Gin, and Bin are the values of the R, G, and B components before white balance processing, Rout, Gout, and Bout are the values of the R, G, and B components after white balance processing, and GainR, GainG, and GainB are gains (white balance coefficients) for multiplying the R, G, and B components, respectively.

$$\text{Rout} = \text{GainR} \times \text{Rin}$$

$$\text{Gout} = \text{GainG} \times \text{Gin} \qquad \dots (2)$$

$$\text{Bout} = \text{GainB} \times \text{Bin}$$

The white balance coefficients can be calculated from the input image data by a known method, for example, by estimating the color temperature of the ambient light, extracting a white area corresponding to the color temperature from the image, and determining coefficient values that makes the pixels in the white area achromatic. The white balance processing unit 301 outputs the processed image data to a noise reduction processing unit 302.

In step S602, the noise reduction processing unit 302 applies noise reduction processing to the input image data to reduce dark current noise and optical shot noise. The noise reduction processing can be performed by a known method using, for example, a low-pass filter or a bilateral filter. The noise reduction processing unit 302 outputs the processed image data to a demosaic processing unit 303.

In step S603, the demosaic processing unit 303 applies demosaic processing to the input image data. The demosaic processing is also called color interpolation processing, and can be realized using a known method. The demosaic processing unit 303 interpolates the values of color components missing in each pixel data, for example, by using the values of surrounding pixels, so that each pixel has values of the three color components R, G, and B. The demosaic processing unit 303 outputs the processed image data to a color matrix processing unit 304.

In step S604, the color matrix processing unit 304 applies color matrix processing to the input image data to match the color gamut of the image data to the color gamut of a destination device. The color matrix processing can be realized by a known method based on the spectral characteristics of the imaging unit 102 (image sensor) and the color gamut of the destination device of the image data. Specifically, the color matrix processing unit 304 applies a matrix consisting of $3\times3$ coefficients k11 to k33 to the color component values Rin, Gin, and Bin for each pixel data of the input image data, for example, as shown in the following Formula (3). As a result, the color component values of each pixel data are converted to color component values Rout, Gout, and Bout suitable for the color gamut handled by the destination device.

$$\begin{pmatrix} R_{out} \\ G_{out} \\ B_{out} \end{pmatrix} = \begin{pmatrix} K_{11} & K_{12} & K_{13} \\ K_{21} & K_{22} & K_{23} \\ K_{31} & K_{32} & K_{33} \end{pmatrix} * \begin{pmatrix} R_{in} \\ G_{in} \\ B_{in} \end{pmatrix} \dots (3)$$

The color matrix processing unit 304 outputs the processed image data to a gamma processing unit 305.

In step S605, the gamma processing unit 305 applies to the input image data an opto-electronic transfer function (OETF) corresponding to an electro-optical transfer function (EOTF) that represents the input/output characteristics of the display device to which the image data is to be output. The EOTF and OETF are also called gamma curves or gamma characteristics, and the gamma processing converts the values of the image data into values that can be appropriately displayed on the device to which the image data is to be output.

The full-color image data obtained through the development processing as described above is output to the skin correction processing unit 202, the skin region detection unit 203, and the synthesis processing unit 204.

• Skin Correction Processing

Next, the details of the skin correction processing performed by the skin correction processing unit 202 of the image processing unit 104 in step S503 will be described. FIG. 4 is a block diagram showing the functional configuration of the skin correction processing unit 202, and FIG. 7 is a flowchart showing the skin correction processing. The skin correction processing unit 202 is composed of a first LPF processing unit 401, a second LPF processing unit 402, a third LPF processing unit 403, a first subtraction unit 404, a second subtraction unit 405, a third subtraction unit 406, a face detection unit 407, a parameter generation unit 408, a first amplitude adjustment unit 409, a second amplitude adjustment unit 410, a third amplitude adjustment unit 411, a third addition unit 412, a second addition unit 413, and a first addition unit 414.

First, in step S701, the first LPF processing unit 401 performs first LPF processing on the input full-color image data. Here, a general filter such as a Gaussian filter or average filter is used as the LPF.

Next, in step S702, the second LPF processing unit 402 performs second LPF processing on the image data that has undergone the first LPF processing in step S701. As for the low-pass filter, a general filter is used, as in step S701.

Furthermore, in step S703, the third LPF processing unit 403 performs third LPF processing on the image data that has undergone the second LPF processing in step S702. As for the low-pass filter, a general filter is used, as in step S701.

In step S704, the first subtraction unit 404 subtracts the image data that has undergone the first LPF processing in step S701 from the input full-color image data to generate a first AC component. For coordinates (x, y), let an input signal be in_pix(x, y) and an image signal after the first LPF processing be lpf1_pix(x, y), then a first AC component ac1_pix(x, y) is expressed by Equation (4).

$$ac1\_pix(x, y) = in\_pix(x, y) - lpf1\_pix(x, y) \qquad \dots (4)$$

Next, in step S705, the second subtraction unit 405 subtracts the image data that has undergone the second LPF processing in step S702 from the image data that has undergone the first LPF processing in step S701 to generate a second AC component. For coordinates (x, y), let an image signal that has undergone the first LPF processing be lpf1_pix(x, y) and an image signal that has undergone the second LPF processing be lpf2_pix(x, y), then a second AC component ac2_pix(x, y) is expressed by Equation (5).

$$ac2\_pix(x, y) = lpf1\_pix(x, y) - lpf2\_pix(x, y) \qquad \dots (5)$$

In addition, in step S706, the third subtraction unit 406 subtracts the image data that has undergone the third LPF processing in step S703 from the image data that has undergone the second LPF processing in step S702 to generate a third AC component. For coordinates (x, y), let an image signal that has undergone the second LPF processing be lpf2_pix(x, y) and an image signal that has undergone the third LPF processing be lpf3_pix(x, y), then a third AC component ac3_pix(x, y) is expressed by Equation (6)..

$$ac3\_pix(x, y) = lpf2\_pix(x, y) - lpf3\_pix(x, y) \qquad \dots (6)$$

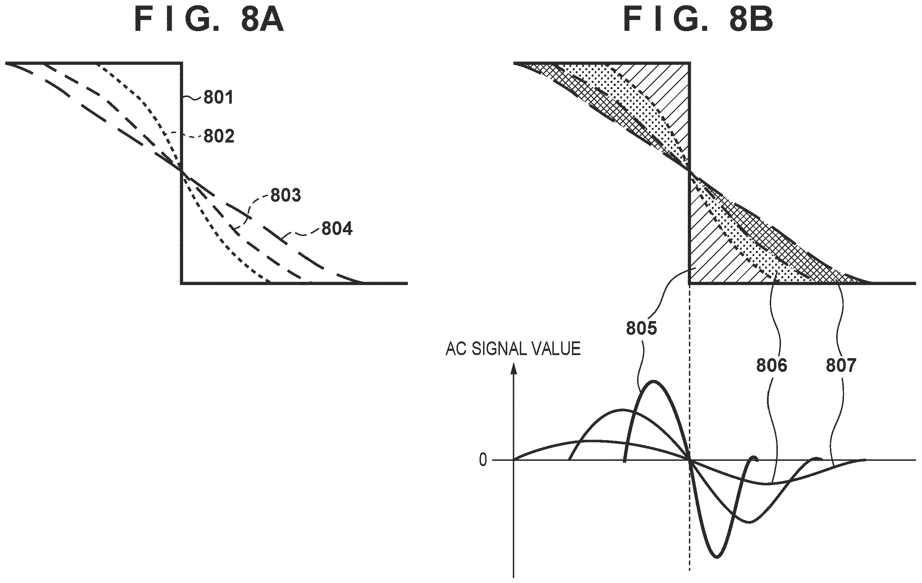

FIG. 8A is a diagram showing an image signal in one dimension, and represents the processing from step S701 to step S703. An image signal 801 of an input image shown as a rectangular wave gradually becomes a gentler signal, with an image signal 802 obtained by the first LPF processing, an image signal 803 obtained by the second LPF processing, and an image signal 804 obtained by the third LPF processing.

FIG. 8B is a conceptual diagram showing an AC signal obtained by the processing of generating AC signals from step S704 to step S706 using the signals shown in FIG. 8A. By the processing in each step, a first AC component 805 in a high frequency band is extracted by the first subtraction unit 404, a second AC component 806 in a middle frequency band is extracted by the second subtraction unit 405, and a third AC component 807 in a low frequency band is extracted by the third subtraction unit 406.

Returning to FIG. 7, in step S707, the face detection unit 407 performs face detection processing on the input image data. Note that the method of face detection processing in this embodiment is not particularly limited, but here, a known method using learning data such as deep learning is used.

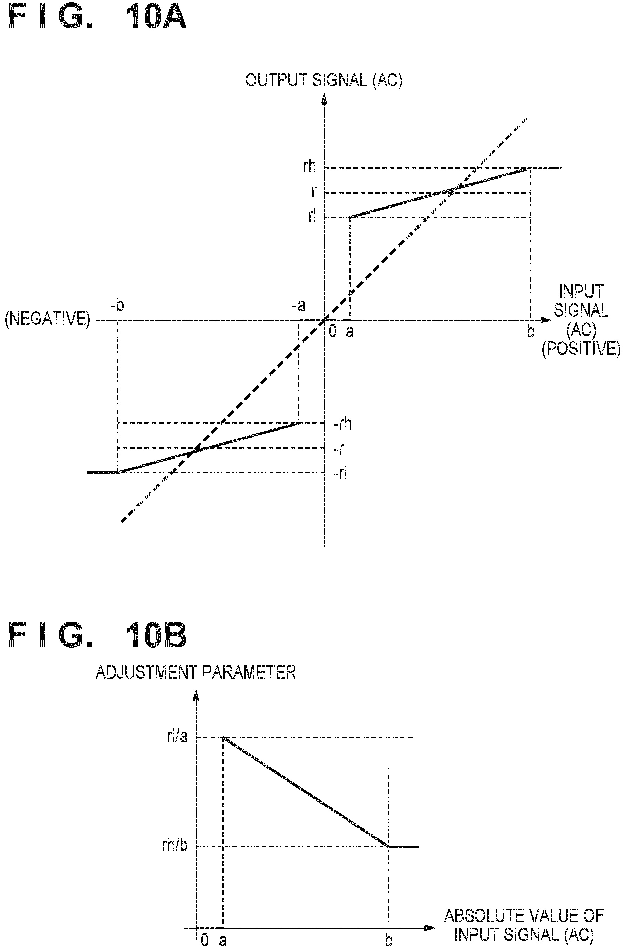

In step S708, the parameter generation unit 408 generates adjustment parameters for the first to third AC components to be used in the processing of steps S709 to S711 based on the face detection results obtained in step S707. Note that a method for generating the adjustment parameters for the first to third AC components will be described in detail later with reference to FIGS. 10A and 10B.

In step S709, the first amplitude adjustment unit 409 adjusts the first AC component generated in step S704 using the adjustment parameter generated in step S708. Let an output signal of the AC component at coordinates (x, y) be ac_out(x, y), an input signal be ac_in(x, y), and the adjustment parameter be grad, then the adjustment method for the AC component is expressed by following Equation (7).

$$ac\_out(x, y) = grad \times ac\_in(x, y) \qquad \dots (7)$$

Next, in step S710, the second amplitude adjustment unit 410 adjusts the second AC component generated in step S705 by using the adjustment parameter generated in step S708. The adjustment method is similar to that of step S709, and therefore description thereof will be omitted.

In addition, in step S711, the third amplitude adjustment unit 411 adjusts the third AC component generated in step S706 by using the adjustment parameter generated in step S708. The adjustment method is similar to that in step S709, and therefore description thereof will be omitted.

After completing the adjustment of the first to third AC components, in step S712, the third addition unit 412 adds the third AC component adjusted in step S711 to the image data that has undergone the third LPF processing in step S703. For a pixel at coordinates (x, y), this process is expressed by Equation (8), where an image signal after the addition is add3_pix(x, y), an adjusted third AC component is ac3_o_pix(x, y), and an image signal after the third LPF processing is lpf3_pix(x, y).

$$add3\_pix(x, y) = ac3\_o\_pix(x, y) + lpf3\_pix(x, y) \qquad \dots (8)$$

In step S713, the second addition unit 413 adds the second AC component adjusted in step S710 to the image data obtained by performing the addition processing in step S712. For a pixel at coordinates (x, y), this process is expressed by Equation (9), where an image signal after the addition is add2_pix(x, y), an adjusted second AC component is ac2_o_pix(x, y), and an image signal obtained through the addition processing in step S712 is add3_pix(x, y).

$$\text{add2\_pix(x, y)} = \text{ac2\_o\_pix(x, y)} + \text{add3\_pix(x, y)} \qquad \dots (9)$$

In addition, in step S714, the first addition unit 414 adds the first AC component adjusted in step S709 to the image data obtained by performing the addition processing in step S713. For a pixel at coordinates (x, y), this process is expressed by Equation (10), where an image signal after the addition is cor_pix(x, y), an adjusted first AC component is ac1_o_pix(x, y), and an image signal obtained through the addition processing in step S713 is add2_pix(x, y).

$$\text{cor\_pix(x, y)} = \text{ac1\_o\_pix(x, y)} + \text{add2\_pix(x, y)} \qquad \dots (10)$$

The image data after the process of step S714 is performed as described above is output as skin-corrected image data, and the skin correction processing ends.

• Generation of Adjustment Parameters

This embodiment is characterized by creating adjustment parameters that keep the amplitude of high-frequency AC components within a certain level range with a predetermined value as a reference, and generating adjustment parameters that attenuate the amplitude of AC components other than the high-frequency AC components.

The reason for generating such adjustment parameters is that high-frequency AC components are easily extracted from the small unevenness on a person's skin surface, and if the high-frequency AC components are attenuated, the overall texture of the skin disappears, resulting in an unnatural impression.

Another reason is that the effect of skin beautification is enhanced by aligning the amplitude of the AC components in the high frequency band within a certain range. This is because skin with even small unevenness on the surface of human skin, called texture, is generally recognized as beautiful skin. Another reason is that the effect of skin beautification is enhanced by attenuating the amplitude of AC components other than high-frequency AC components in order to reduce wrinkles, blemishes, etc. on the human skin.

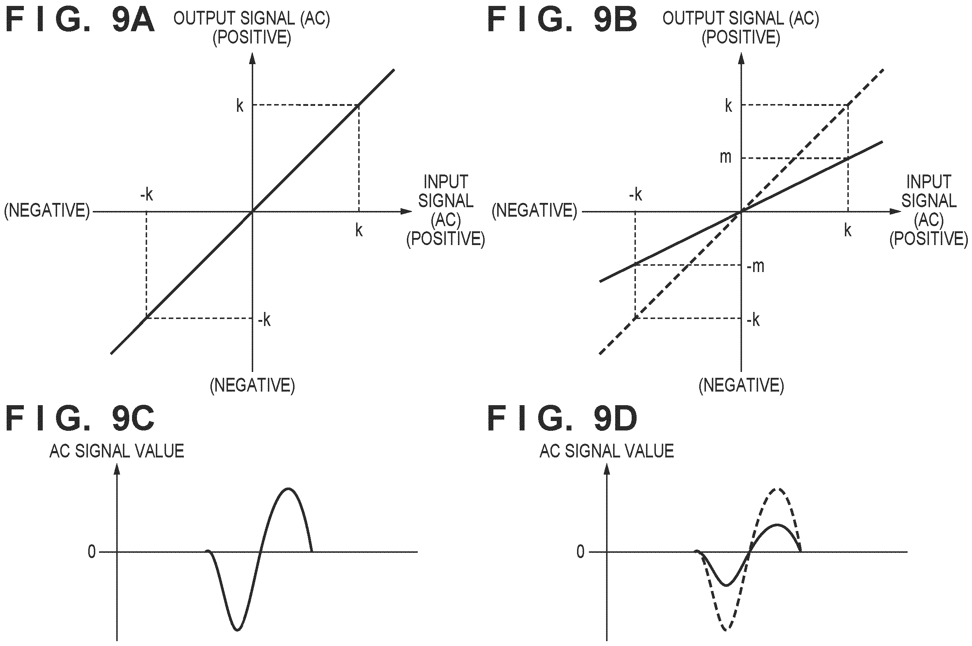

First, referring to FIG. 9A, the input/output relationship in a case where no adjustment is made to the AC components will be described. The horizontal axis indicates the input signal of the AC component, and the vertical axis indicates the output signal of the AC component. In this case, for coordinates (x, y), let the output signal of the AC component be ac_out(x, y) and the input signal be ac_in(x, y), then an input/output relationship shown in FIG. 9A can be expressed by Equation (11), and the adjustment parameter grad in the above-mentioned Equation (7) is 1. Then, as shown in FIG. 9C, the AC signal is output without being adjusted.

$$\text{ac\_out(x, y)} = \text{ac\_in(x, y)} \qquad \dots (11)$$

Next, the input/output relationship in a case of reducing the amplitude of the AC component will be described with reference to FIG. 9B. In this case, the input/output relationship shown in FIG. 9B can be expressed by the above-mentioned Equation (7), and the adjustment parameter grad is greater than 0 and less than 1 (0<grad<1).

$$\text{ac\_out(x, y)} = \text{grad} \times \text{ac\_in(x, y)} \qquad \dots (7)$$

In this embodiment, with the reasons described above, the amplitudes of the second and third AC components are adjusted using adjustment parameters having values of 0<grad<1 so as to have an input/output relationship as shown in FIG. 9B. With these adjustment parameters, the amplitudes of the AC components of both the positive and negative input signals of the second and third AC components are adjusted to be decreased as shown in FIG. 9D. The adjustment parameters for the second and third AC components may be the same value or different values.

Furthermore, with the reasons mentioned above, in this embodiment, the amplitude is adjusted for the first AC component in the high frequency band using adjustment parameter that results in input/output characteristics as shown in FIG. 10A.

As shown in FIG. 10A, adjustment is made for a positive input signal using an adjustment parameter such that the output signal falls within the range from a signal value rh to a signal value rl, centered on a predetermined signal value. When the signal value of the input signal is b or greater, the output signal has the upper limit signal value rh.

Similarly, adjustment is made for a negative input signal using an adjustment parameter such that the output signal falls within the range from a signal value -rh to a signal value -rl, centered on a predetermined signal value. When the signal value of the input signal is -b or less, the output signal has the lower limit signal value -rh.

In addition, there may be cases where minute noise components present in image data are erroneously detected as skin texture, and as a countermeasure to this, an adjustment parameter capable of reducing noise components in advance may be set. In the example shown in FIG. 10A, for AC components whose signal value of the input signal is less than the threshold value a (-a to a), the output signal is set to 0 to remove minute noise components.

FIG. 10B is a diagram showing an adjustment parameter for achieving the input/output characteristics illustrated in FIG. 10A, and shows an adjustment parameter for the absolute value of the signal value of the input signal. As shown in FIG. 10B, by determining the adjustment parameter grad according to the absolute value of the signal value of the input signal, the amplitude can be adjusted using Equation (7).

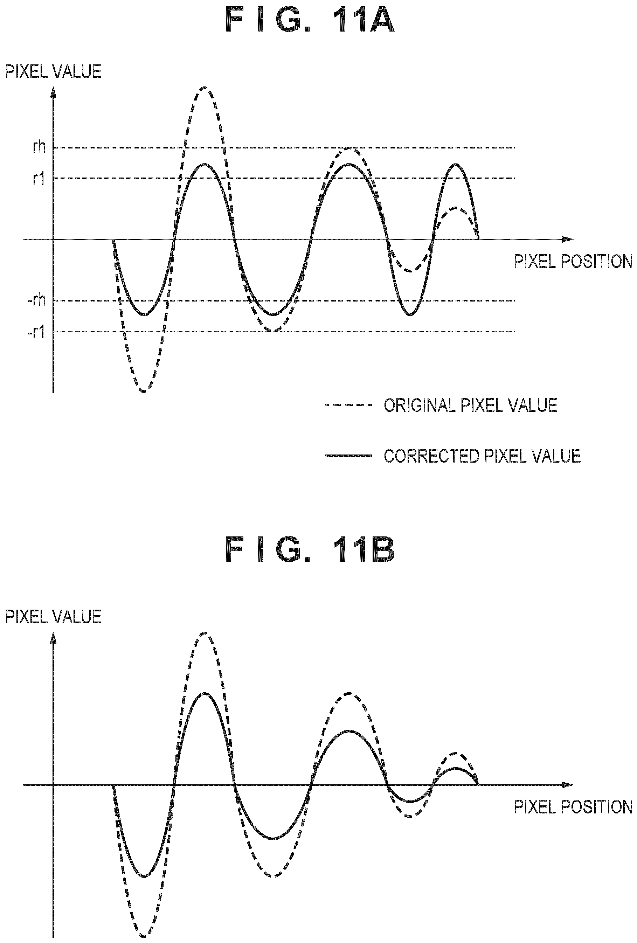

FIG. 11A is a graph showing an example of the first AC component whose amplitude is adjusted using the adjustment parameter shown in FIG. 10B. Note that in the graphs of FIG. 11A and FIG. 11B, the result of removing the minute noise components described above is not shown for convenience, but only the result of adjustment of the amplitude is shown. The horizontal axis shows the pixel position of image data, and the vertical axis shows the pixel value, for example, color information such as RGB. A broken line is the pixel value of the person's skin surface in the original image data, and positive and negative image components exist centered on a certain pixel value.

A solid line in FIG. 11A shows an example of the result when the amplitude is adjusted using the adjustment parameter shown in FIG. 10B. The amplitude of each image component is adjusted to fall within a certain level range (rh to rl, -rh to -rl) based on a predetermined value, and image components that originally have a large amplitude are attenuated, and image components that originally have a small amplitude are amplified.

FIG. 11B is a diagram illustrating an example of an adjustment result by a conventional adjustment method as a comparison with the adjustment result shown in FIG. 11A in this embodiment, and shows a case where the same input signal as in FIG. 11A is subjected to amplitude adjustment using the adjustment parameter shown in FIG. 9B. As shown by a solid line, the amplitude is attenuated in all image components. As can be seen, if the amplitude is adjusted using the adjustment parameter for AC components within the high frequency band as well as the AC components outside the high frequency band, the image components that are originally small in amplitude are further attenuated, and the texture of the skin is easily lost.

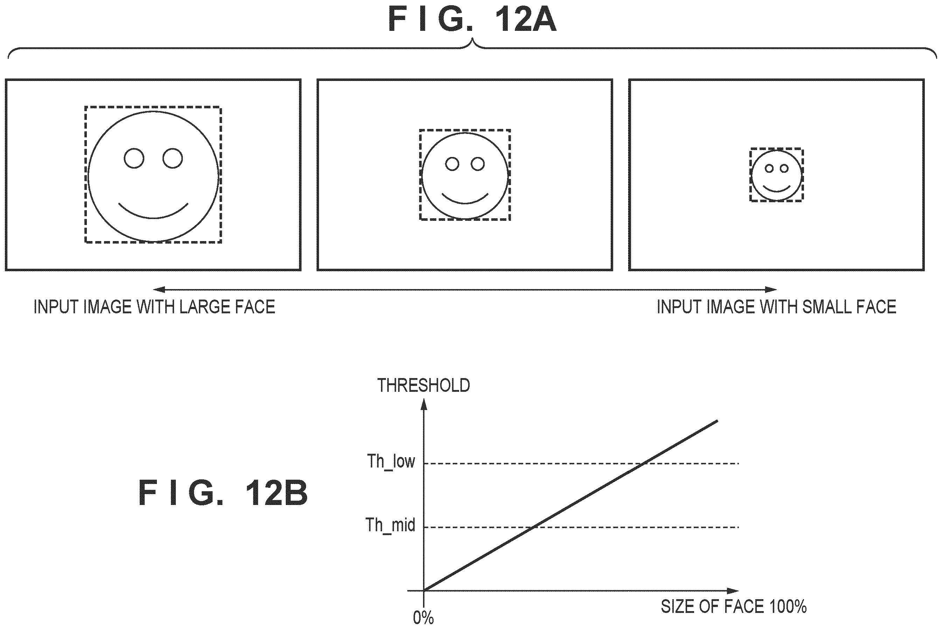

In addition, this embodiment is aiming at making the amplitude of the AC components in the high frequency band fall within a certain level range with a predetermined value as a reference, but if the size of the face changes depending on the input image as in FIG. 12A, the target frequency band to be adjusted to the above-mentioned certain level range changes. Therefore, the target frequency band to be adjusted to the certain level range may be changed depending on the size of the face.

Selection of the target frequency band can be achieved by having a table that determines the target frequency band according to the size of the face, as shown in FIG. 12B. The vertical axis of the table indicates the threshold for frequency band selection, and the horizontal axis indicates the size of the face. In this embodiment, the size of the face indicates the ratio of the face region to the entire image, but the number of pixels in the face region may be used as is.

If the size of the face is relatively small and is less than the threshold value Th_mid, the AC components in the high frequency band affect the texture of the skin, so the AC components in the high frequency band are selected as the target frequency band. Conversely, if the size of the face is relatively large and the value of the vertical axis in the table is equal to or greater than the threshold value Th_low, the AC components in the low frequency band also affect the texture of the skin, so the AC components in the low frequency band are selected as the target frequency band. Also, when the value of the vertical axis in the table is equal to or greater than the threshold value Th_mid and less than the threshold value Th_low, the AC components in the middle frequency band are selected as the target frequency band. In this way, the target frequency band to be adjusted to a certain level range is adaptively changed according to the change in the size of the face. Then, the amplitude of the AC components in the frequency band that was not selected is adjusted using the adjustment parameter generated as shown in FIG. 9B.

In the above example, the correction method using the adjustment parameters and the Equation (7) is described, but the present invention is not limited to this. For example, a table of the amplitude of the output signal with respect to the amplitude of the input signal may be stored, and an output signal with an amplitude corresponding to the amplitude of the input signal may be output.

Further, in the above example shown in FIG. 5, the above-mentioned skin correction processing is performed on the entire image in step S503, and then the signal of the skin region detected in step S504 and the signal of the other area are synthesized in step S505, but the present invention is not limited to this. It is also possible to detect the skin region before the skin correction processing, and perform the skin correction processing only on the detected skin region. In this case, the synthesis processing in step S505 is not needed.

As described above, according to the present embodiment, it is possible to perform skin correction that gives a natural impression while retaining the texture of the person's skin.

## EP 4 610 926 A1

<Other Embodiments>

The present invention may be applied to a system made up of a plurality of devices, or to an apparatus made up of a single device.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1.   An image processing apparatus comprising:

> input means configured to input an image signal;
> extracting means configured to extract a first signal in a predetermined first frequency band from the image signal; and
> adjusting means configured to adjust an amplitude of the first signal so that the amplitude falls within a predetermined amplitude range.

2.   The image processing apparatus according to claim 1, wherein the adjusting means adjusts an amplitude of the first signal that is greater than a predetermined first threshold value to fall within a predetermined amplitude range.

3.   The image processing apparatus according to claim 1 or 2, wherein the adjusting means adjusts the amplitude of the first signal to fall within the amplitude range by attenuating the amplitude of the first signal in a case where the amplitude of the first signal is over the amplitude range, and amplifying the amplitude of the first signal in a case where the amplitude of the first signal is below the amplitude range.

4.   The image processing apparatus according to any one of claims 1 to 3, wherein

> the extracting means further extracts a second signal in a second frequency band different from the first frequency band from the image signal, and
> the adjusting means further attenuates an amplitude of the second signal.

5.   The image processing apparatus according to any one of claims 1 to 4 further comprising:

> first detection means configured to detect a skin region in an image represented by the image signal; and
> synthesis means configured to synthesize the image signal and an adjusted image signal adjusted by the adjusting means in accordance with a result of detection by the first detection means.

6.   The image processing apparatus according to claim 5, wherein

> the first detection means detects a probability of a skin region in the image represented by the image signal, and
> the synthesis means performs synthesis based on the probability.

7. The image processing apparatus according to any one of claims 1 to 6, wherein the first frequency band is a high frequency band.

8. The image processing apparatus according to any one of claims 1 to 6 further comprising:

   second detection means configured to detect a face region in an image represented by the image signal; and selection means configured to select the first frequency band to be extracted by the extracting means in accordance with a size of the face region detected by the second detection means.

9. The image processing apparatus according to claim 8, wherein

   the extracting means extracts a signal in a low frequency band, a signal in a medium frequency band, and a signal in a high frequency band from the image signal; and
   the selection means selects one of the low frequency band, the medium frequency band, and the high frequency band as the first frequency band.

10. The image processing apparatus according to claim 9, wherein the selection means selects a frequency band on a lower frequency side from the low frequency band, the medium frequency band, and the high frequency band as the size of the face region increases.

11. The image processing apparatus according to claim 9, wherein, in a case where the size of the face region is less than a threshold, the selection means selects a frequency band on a higher frequency side than when the size of the face region is equal to or greater than the threshold.

12. The image processing apparatus according to any one of claims 1 to 4 further comprising first detection means configured to detect a skin region in an image represented by the image signal,
   wherein the extracting means and the adjusting means perform processing on an image signal in the detected skin region.

13. An electronic apparatus comprising:

   imaging means configured to shoot an image and output an image signal; and
   the image processing apparatus according to any one of claims 1 to 12.

14. An image processing method comprising:

   an input step of inputting an image signal;
   an extracting step of extracting a first signal in a predetermined first frequency band from the image signal; and
   an adjusting step of adjusting an amplitude of the first signal so that the amplitude falls within a predetermined amplitude range.

15. A program for causing a computer to function as each of the means of the image processing apparatus according to any one of claims 1 to 12.

16. A computer-readable storage medium storing the program according to claim 15.

# FIG. 1

EP 4 610 926 A1

# F I G. 2

**IMAGE PROCESSING UNIT**

104

IMAGE DATA → **201** DEVELOPMENT PROCESSING UNIT → **202** SKIN CORRECTION PROCESSING UNIT → **204** SYNTHESIS PROCESSING UNIT → OUTPUT IMAGE DATA

**203** SKIN REGION DETECTION UNIT

# F I G. 3

201

**DEVELOPMENT PROCESSING UNIT**

IMEGE DATA → **301** WHITE BALANCE PROCESSING UNIT → **302** NOISE REDUCTION PROCESSING UNIT → **303** DEMOSAIC PROCESSING UNIT → **304** COLOR MATRIX PROCESSING UNIT → **305** GAMMA PROCESSING UNIT → OUTPUT IMAGE DATA

EP 4 610 926 A1

# FIG. 4

SKIN CORRECTION PROCESSING UNIT   202

FACE DETECTION UNIT

**407**

FIRST LPF PROCESSING UNIT

**401**

SECOND LPF PROCESSING UNIT

**402**

INPUT IMAGE DATA

**408** PARAMETER GENERATION UNIT

**404** FIRST SUBTRACTION UNIT

**405** SECOND SUBTRACTION UNIT

**403** THIRD LPF PROCESSING UNIT

**406** THIRD SUBTRACTION UNIT

**409** FIRST AMPLITUDE ADJUSTMENT UNIT

**410** SECOND AMPLITUDE ADJUSTMENT UNIT

**411** THIRD AMPLITUDE ADJUSTMENT UNIT

**412** THIRD ADDITION UNIT

**413** SECOND ADDITION UNIT

**414** FIRST ADDITION UNIT

OUTPUT IMAGE DATA

# FIG. 5

START

PERFORM STILL IMAGE SHOOTING — S501

PERFORM DEVELOPMENT PROCESSING — S502

PERFORM SKIN CORRECTION PROCESSING — S503

PERFORM SKIN REGION DETECTION PROCESSING — S504

PERFORM SYNTHESIS PROCESSING — S505

RECORD SYNTHESIZED IMAGE — S506

END

# FIG. 6

START

PERFORM WHITE BALANCE PROCESSING — S601

PERFORM NOISE REDUCTION PROCESSING — S602

PERFORM DEMOSAIC PROCESSING — S603

PERFORM COLOR MATRIX PROCESSING — S604

PERFORM GAMMA PROCESSING — S605

RETURN

EP 4 610 926 A1

# F I G. 7

START

PERFORM FIRST
LPF PROCESSING — S701

PERFORM SECOND
LPF PROCESSING — S702

PERFORM THIRD
LPF PROCESSING — S703

GENERATE FIRST
AC COMPONENT — S704

GENERATE SECOND
AC COMPONENT — S705

GENERATE THIRD
AC COMPONENT — S706

PERFORM FACE DETECTION
PROCESSING — S707

GENERATE ADJUSTMENT
PARAMETERS FOR EACH
AC COMPONENT — S708

ADJUSTS FIRST
AC COMPONENT — S709

ADJUSTS SECOND
AC COMPONENT — S710

ADJUSTS THIRD
AC COMPONENT — S711

ADD ADJUSTED THIRD AC
COMPONENT TO IMAGE
DATA AFTER THIRD LPF
PROCESSING — S712

ADD IMAGE DATA ADDED IN
S712 TO ADJUSTED SECOND
AC COMPONENT — S713

ADD IMAGE DATA ADDED IN
S713 TO ADJUSTED FIRST
AC COMPONENT — S714

RETURN

16

# F I G. 8A

# F I G. 8B

801
802
803
804

805
806
807

AC SIGNAL VALUE

0

# FIG. 9A

OUTPUT SIGNAL (AC)
(POSITIVE)

INPUT SIGNAL (AC) (POSITIVE)

(NEGATIVE)

(NEGATIVE)

k

-k

-k

k

# FIG. 9B

OUTPUT SIGNAL (AC)
(POSITIVE)

INPUT SIGNAL (AC) (POSITIVE)

(NEGATIVE)

(NEGATIVE)

k

m

-m

-k

-k

k

# FIG. 9C

AC SIGNAL VALUE

0

# FIG. 9D

AC SIGNAL VALUE

0

EP 4 610 926 A1

# F I G. 10A

# F I G. 10B

# F I G. 11A

PIXEL VALUE

rh

r1

PIXEL POSITION

-rh

-r1

----- ORIGINAL PIXEL VALUE

——— CORRECTED PIXEL VALUE

# F I G. 11B

PIXEL VALUE

PIXEL POSITION

# FIG. 12A

INPUT IMAGE WITH LARGE FACE

INPUT IMAGE WITH SMALL FACE

# FIG. 12B

THRESHOLD

Th_low

Th_mid

0%

SIZE OF FACE 100%

EP 4 610 926 A1

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 244 059 B2 (UEDA TOORU [JP]; FUJIFILM CORP [JP]) 14 August 2012 (2012-08-14) * paragraphs [0048], [0066] - [0072]; figures 1,2,3,9A,9B * | 1-16 | INV. G06T7/00 G06T7/11 H04N23/611 |
| A | US 2023/410265 A1 (KIMURA NAOTO [JP]) 21 December 2023 (2023-12-21) * the whole document * | 1-16 | |

-----

-----

**TECHNICAL FIELDS SEARCHED (IPC)**

G06T
H04N

The present search report has been drawn up for all claims

| Place of search | Date of completion of the search | Examiner |
|---|---|---|
| Munich | 23 June 2025 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7605

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | | Publication date | Patent family member(s) | | Publication date |
|---|---|---|---|---|---|
| US 8244059 | B2 | 14-08-2012 | JP | 4666179 B2 | 06-04-2011 |
| | | | JP | 2009020834 A | 29-01-2009 |
| | | | US | 2009016639 A1 | 15-01-2009 |
| US 2023410265 | A1 | 21-12-2023 | JP | 2024000854 A | 09-01-2024 |
| | | | US | 2023410265 A1 | 21-12-2023 |

EPO FORM P0459

For more details about this annex : see Official Journal of the European Patent Office, No. 12/82

**REFERENCES CITED IN THE DESCRIPTION**

**Patent documents cited in the description**

- JP 2001118064 A